Europäisches Patentamt

European Patent Office

Office européen des brevets

(11) Publication number: **0 150 953**
**B1**

# EUROPEAN PATENT SPECIFICATION

(45) Date of publication of patent specification: **11.04.90**

(51) Int. Cl.⁵: **C 08 F 8/50**

(21) Application number: **85300266.5**

(22) Date of filing: **15.01.85**

(54) Extrusion finishing of perfluorinated copolymers.

(30) Priority: **16.01.84 US 571198**

(43) Date of publication of application:
**07.08.85 Bulletin 85/32**

(45) Publication of the grant of the patent:
**11.04.90 Bulletin 90/15**

(84) Designated Contracting States:
**DE FR GB IT NL**

(56) References cited:
**GB-A-1 496 347**
**US-A-2 933 536**
**US-A-3 085 083**
**US-A-3 862 265**

(73) Proprietor: **E.I. DU PONT DE NEMOURS AND COMPANY**
**1007 Market Street**
**Wilmington Delaware 19898 (US)**

(72) Inventor: **Morgan, Richard Alan**
**4708 7th Avenue Vienna**
**West Virginia 26105 (US)**
Inventor: **Sloan, William Henry**
**905 49th Street Vienna**
**West Virginia 26105 (US)**

(74) Representative: **Myerscough, Philip Boyd et al**
**J.A.Kemp & Co. 14, South Square Gray's Inn**
**London, WC1R 5EU (GB)**

EP 0 150 953 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to treatment of raw perfluorinated copolymers to improve their thermal stability.

The aqueous dispersion copolymerization of tetrafluoroethylene (TFE) with perfluorinated alpha olefins such as hexafluoropropene (HFP) produces a raw product which must be further treated or "finished" before being melt fabricated into a useful final product. A major purpose of the "finishing" is to remove all sources of volatiles which could cause bubbles or voids in the final product.

Several sources of volatiles can exist in the unfinished or raw polymers including unstable endgroups and unstable backbone linkages. Various types of endgroups are possible but use of the common persulfate initiator leads to carboxylic acid endgroups. The degradation of these carboxylic acid ends can be a major source of volatiles at fabrication temperatures as was discussed in U.S. Patent 3,085,083 (R. C. Schreyer). The polymer endgroups after extrusion may also be vinyl ($-CF=CF_2$), difluorohydride ($-CF_2H$), internal olefin [$-CF=CF(CF_2)CF_3$, $(CF_2)_nCH_3$, or carboxylic acid fluoride ($-COF$). The relative amounts of these ends will be dependent on the extrusion conditions, the type of initiator, the presence of salts which can catalyze the decarboxylation, and moisture level.

The second source of volatiles is believed to be due to the presence in the polymer backbone of relatively unstable linkages which thermally degrade during fabrication. These links may be present even if the polymer has stable endgroups directly from polymerization. The elimination of most of these links is desirable to achieve a low volatiles level. The structure(s) of the unstable backbone linkages in perfluorocopolymers have not been identified but appear to be comonomer diads not involving TFE. Thus in TFE/HFP coplymers the unstable backbone linkage arises from two adjacent HFP units. The volatiles arising from initial thermal degradation of TFE/HFP copolymer flake (unfinished) are very rich in HFP monomer. The level of unstable backbone linkages in HFP/TFE copolymers appears to be an inverse function of molecular weight (and melt viscosity). This suggests that the HPF diad forms by combination as the termination mechanism in polymerization. Regardless of the structure of the polymer backbone instability, a concentration can exist which causes problems with bubble formation during melt fabrication.

It has been found that unstable backbone links may be removed under conditions of high shear such as in a twin screw extruder which is designed to achieve good mixing and high shear.

Specifically, the process of this invention is a process for removing unstable backbone linkages from a copolymer to improve its thermal stability which process comprises

a) subjecting in a chamber a raw (i.e., as polymerized) melt-processable copolymer of 80—99% by weight units of tetrafluoroethylene and complementally 20—1% by weight units of at least one ethylenically unsaturated copolymerizable comonomer, which copolymer has a backbone volatiles index greater than 15 and a melt viscosity between $10^2$ and $10^6$ Pa·s, to an absolute pressure of less than $10^5$ Pa and at a temperature of between 220°C and 450°C while moving the copolymer through the chamber and subjecting the copolymer to a shear rate between 500 and 7000 reciprocal seconds for a time sufficient to result in the copolymer having a backbone volatiles index less than 15; and

b) removing the copolymer from the chamber.

Preferably, the chamber will be an extruder, and most preferably a twin screw extruder that contains kneading blocks.

Preferably, an absolute pressure of less than $10^4$ Pa will be employed.

Preferably, the copolymerizable comonomer will be hexafluoropropylene.

Preferably in step b), and particularly if subsequent finishing steps are to be carried out such as filtering or fluorinating, it is most convenient to remove the polymer from the chamber by attaching an extruder or another melt pumping device to the chamber and removing the copolymer simply by extruding it through this added extruder or pumping device, which may be a single screw extruder.

TFE copolymers are melt-processable fluorine-containing resins for instance, TFE/alpha-olefins such as TFE-hexafluoropropylene copolymer. These melt-processable fluorine-containing resins are melt-flowable, that is, the melt viscosity of these resins is generally lower than $10^5$ Pas ($10^6$ poises) at an optimum processing temperature and, therefore, they provide a film having less pinholes and voids as compared with polytetrafluoroethylene which has an excellent chemical and corrosion resistance but has no melt-flowability or melt-processability since it has an extremely high melt viscosity of from $10^9$ to $10^{10}$ Pas ($10^{10}$ to $10^{11}$ poises) even at a processing temperature of about 380°C.

If the chamber employed is an extruder, the approximate shear rate can be calculated by the following formula:

$$a = \pi \frac{DN}{h}$$

a = shear rate, $S^{-1}$
D = diameter of the screw (millimeters)
N = revolutions per second
h = the distance between the screw and the barrel wall (in millimeters)
π = 3,1416

Shear rates will be highest at the screw tips and kneading block crests.

The temperature range employed is from 220 to 450°C with the preferred range from 240 to 400°C.

The residence time employed is that needed to reduce the backbone volatiles index to the values recited above. Generally this will be between about 1 and 30 minutes.

If the polymer removed from the chamber contains unstable endgroups or if it has poor color, these problems can be eliminated by fluorination. The fluorination may be carried out with a variety of fluorine radical generating compounds under a variety of conditions as described in British Patent 1210794. Preferably the polymer is contacted with a fluorine/inert gas mixture at an elevated temperature which is below the melting point of the polymer. If the fluorination is carried out in a partially filled (with polymer) container through which a fluorine/inert gas mixture is passed with agitation of the polymer to continually expose new surfaces, then the temperature may be 100°C—250°C with a preferred temperature of 130°C—200°C and the residence time may be 30 minutes to 12 hours, with a longer time being required with lower temperatures. A 25/75% mixture of fluorine/nitrogen is preferred as the fluorinating medium. The unstable ends are converted by the action of fluorine to perfluoromethyl ($—CF_3$) ends with the exception of carboxylic acid fluoride ends (which react very slowly with fluorine). Quantitative meaurements of the endgroups may be made by infrared analysis as described in U.S. Patent No. 3085 083.

If the resin to be processed contains $—CF=CH_2$ end groups or end groups which are convertible to $—CF=CF_2$ end groups, then acid fluoride ($—COF$) ends may form by oxidation of the $—CF=CF_2$ groups. Acid fluoride ends can be resistant to stabilization techniques such as fluorination and thus should be minimized during the extrusion process. This may be done in two ways: 1) The flake and the flake handling equipment may be sparged with nitrogen to remove atmospheric oxygen which might otherwise oxidize the vinyl end groups, (time of contact with nitrogen will be a time sufficient to essentially remove all absorbed and adsorbed oxygen), and 2) water may be injected into the extruder with the polymer so that any acid fluoride ends which are formed may be hydrolyzed to carboxylic acid ends. The required level of moisture addition depends on the level of acid fluoride ends which in turn depends on the type of end groups in the polymer feed and the severity of the extrusion conditions, but generally will be between 0.5—1.5% by weight based on copolymer.

The application of vacuum to the process functions to remove gases from resin degradation, excess water (if used), and low molecular weight fluoro-oligomers.

It should be apparent that techniques other than fluorination may also be utilized to eliminate unstable endgroups. One such method is humid heat treatment disclosed in US patent 3085083,

Certain initiators such as the perfluoroacyl peroxides $[F(CF_2)_nCO_2)_2O]$ give predominantly stable endgroups directly from polymerization and therefore do not require fluorination.

Test Procedures

Standard melt viscosities of the polymers were measured according to American Society for Testing and Materials test D—1238—52T, modified as follows: The cylinder, orifice and piston tip are made of a corrosion-resistant alloy, Haynes "Stellite®" 19, made by Haynes Stellite Co. The 5.0 g sample is charged to the 9.53 mm (0.375 inch) inside diameter cylinder, which is maintained at 372°C±1°C. Five minutes after the sample is charged to the cylinder, it is extruded through a 2.10 mm (0.0825 inch) diameter, 8.00 mm (0.315 inch) long square edge orifice under a load (piston plus weight) of 5000 grams. This corresponds to a shear stress of 44.8 KPa (6.5 pounds per square inch). The melt viscosity in Pa.s is calculated as 5317 divided by the observed extrusion rate in grams per minute.

The tendency of fluoropolymer to give bubbles during fabrication has been previously measured by a "volatiles index" test. This test measures the pressure built up by heating a polymer sample to 380°C. This pressure rise is the result of desorbed dissolved gases and polymer endgroup and backbone degradation. The primary purpose of the invention described herein is the removal of unstable backbone linkages. Thus all of the examples shown herein were treated with fluorine to remove unstable endgroups before analysis of volatiles content. A modification of the "volatiles index" test is employed to remove the contribution of dissolved gases, especially air, in the polymer to the observed pressure rise. In the procedure which was employed here, a 10.0g (w) sample of the resin is placed in an aluminum foil thimble which is charged into a glass tube equipped on its top with a manometer. The tube is evacuated to 0.1—2 mm Hg (13.3—267 Pa) and then upon reaching equilibrium, is placed in a hot block maintained at 150°C for three hours. The tube is reevacuated to remove the desorbed gases and then the tube is placed in a hot block maintained at 380°C for at least 40 minutes. The pressure readings are recorded as a function of time. The backbone volatiles index is calculated by the following equation:

$$\text{Backbone V.I.} = \frac{(P_{40} - P_{10})\, V}{10\, w}$$

wherein $P_{10}$ and $P_{40}$ are the pressures of the sample in mm Hg after 10 and 40 minutes in the hot block, V is the volume of the tube in ml, and w the sample weight in grams. The volume of the apparatus was 110±10 ml.

When the analysis is performed as described above, a high "backbone volatiles index" indicates a relatively high level of polymer chain backbone unstable linkages which can potentially degrade and give volatiles and bubbles during melt fabrication of the resin such as into a molded article or as a coating onto wire. The "backbone volatiles index" should be less than 15, preferably less than 10, to avoid an amount of bubbles formed upon fabrication which is detrimental to the resin properties.

Color of the extruded or the extruded and fluorinated cubes was determined by projecting white light onto a sample, and passing the reflected light through filters and measuring it with a photocell. A high percent green (%G) reflectance indicates a high level of whiteness of the cubes. The colorimeter used in the examples was a "DuColor®" colorimeter.

The color of the cubes as-extruded is dependent upon the severity of the extrusion conditions, the level and type of polymerization initiator residues present, and the level of contamination, if any. The color after subjecting to shear can be quite dark. Fluorination results in essentially white cubes as shown by the high %G values.

### Examples
### Reduction of Backbone Volatiles by Shear

Several tetrafluoroethylene/hexafluoropropylene copolymer (TFE/HFP copolymer) flake samples which had been polymerized with ammonium persulfate (APS) or mixed ammonium/potassium persulfate (APS/KPS) initiators and which had various melt viscosities as-polymerized, were finished as described below to give products having a reduced tendency to form bubbles upon melt-fabrication.

The experiments were carried out with a twin screw extruder, equipped with a vacuum port and vacuum system, which fed into a single screw extruder which was also equipped with a vacuum port and a screen pack and die. The twin screw extruder served as a resin melter and a reactor in which the desired backbone stabilization was conducted. The single screw extruder was used as a melt pump to generate the pressure necessary to move the resin through the screen pack and then the die. Vacuum was applied to remove volatiles from the molten resin.

The extrusion equipment described above is a "Kombiplast"® extruder from the Werner and Pfleiderer Corporation. Corrosion-resistant materials were used for those parts which came into contact with the polymer melt. The twin-screw extruder had two corotating screws disposed side by side. The screw configurations were designed with an intermeshing profile and tight clearances, causing them to be self-wiping. The screw configurations included kneading blocks and conveying sections but the highest shear occurs in the kneading block sections. The screws contained three matched kneading block sections. In addition to the tight clearance in the kneading blocks, high screw speeds (up to 162 rpm) contributed to the high shear.

The twin screw extruder emptied into a single screw melt pump which was designed to generate pressure at low shear rates for filtration through the screenpack. The single screw extruder had a vacuum port at its rear where the melt arrived from the twin screw extruder. The screenpack contained several different screen sizes, the smallest having sieve openings of 0.074×0.222 mm (200×600 mesh).

The die contained either 15 or 28 (larger number of die holes was used with higher viscosity resin) 2.5 mm diameter holes and the extruding melt was melt-cut into pellets which were cooled by a stream of water. The pellets were cylindrically shaped about 3.5 mm in diameter and 1.5—3.0 mm thick.

The details of the extrusion conditions are shown in Table I.

4

## TABLE I

### EXTRUSION DATA - EXAMPLES 1, 2 AND 3

| Parameter | Example 1 | 2 | 3 |
|---|---|---|---|
| Polymerization Initiator | APS/KPS | APS | APS/KPS |
| Feed MV (kPa s) | 11.2 | 25.0 | 148. |
| **Twin Screw Conditions** | | | |
| Rate (g/s) | 17.7 | 17.3 | 13.2 |
| Shear Rate, s$^{-1}$ Channel | 63 | 83 | 46 |
| kneading Block Crest | 1380 | 1770 | 980 |
| Screw Speed (rpm) | 124 | 162 | 90 |
| Barrel Temp. °C | 360 | 370 | 310 |
| Power (kW) | 3.3 | 8.5 | 6.0 |
| Hold Up Time, s | 576 | 324 | 792 |
| Vacuum Port Pressure (kPa) | 5.8 | 6.5 | 7.5 |
| Melt Temperature (exit), °C | 316 | 352 | 323 |
| **Single Screw Conditions** | | | |
| Shear Rate, s$^{-1}$ Channel | 2.0 | 3.5 | 9.2 |
| Clearance | 97 | 170 | 450 |
| Screw Speed (rpm) | 8 | 14 | 37 |
| Barrel Temp. °C | 360 | 370 | 350 |
| Power (kW) | 2.0 | 3.8 | 9.4 |
| Hold Up Time, s | 300 | 300 | 402 |
| Vacuum Port Pressure (kPa) | 12.3 | 11.6 | 13.3 |
| **Screen Pack Conditions** | | | |
| Pressure (MPa) | 10.1 | 15.2 | 21.4 |
| Hold Up Time, s | 800 | 820 | 1075 |
| **Die Conditions** | | | |
| Number of Die Holes | 15 | 15 | 28 |
| Pressure (MPa) | 6.7 | 8.3 | 9.3 |
| Melt Temperature (°C) | 365 | 372 | 365 |
| **Product Properties** | | | |
| Melt Viscosity (kPa s) | 9.5 | 22.5 | 68.3 |
| %G | 5 | 18 | 5 |

The extruded pellets had the melt viscosities shown in Table I. The pellets were gray-brown in color as indicated by the low % G values (also in Table I). Endgroup analyses indicated that the pellets still contained some unstable endgroups, especially the sample of Example 2. The pellets were then exposed to fluorine gas to improve the color and eliminate the remaining unstable endgroups.

Subsequent Fluorination

A fluorination reactor was used, which was a modified double cone blender equipped with gas inlet and vent connections and an electric heating mantle. The gas inlet dipped down into the tumbling particles and the vent pointed up into the vapor space and both are held stationary within the rotating blender. The polymer pellets were placed in the reactor which was then sealed and rotation was begun at 5 rpm. The polymer pellets were heated with the electric mantle on the reactor and also with hot filtered air. When the polymer reached the desired temperature, the air stream was cut off and a vacuum was applied to the reactor to remove all air. A mixture of fluorine/nitrogen (25/75 volume %) was fed through the reactor for the desired time period while maintaining the temperature with the electric mantle heater. The conditions of fluorination are summarized in Table II.

TABLE II

| Example Sample | Polymer Charge[1] | Fluorination Time | Fluorination Temperature | Fluorine Added gm/Kg polymer |
|---|---|---|---|---|
| 1 | 44% | 5 hours | 190°C | 2.49 |
| 2 | 60% | 4 hours | 190°C | 1.65 |
| 3 | 58% | 4 hours | 190°C | 0.82 |

(1)  Volume % of fluorinator capacity.

At the end of the fluorination cycle, the fluorine and the electric mantle heats were turned off and the reactor was once again evacuated slowly. The residual fluorine was then purged from the reactor with nitrogen. The nitrogen purge was checked for fluorine with moist potassium iodide paper (paper will darken in presence of fluorine). When the fluorine was gone, the gas flow was switched to cold air for cooling. After the batch was cooled, it was dropped.

The endgroup analyses showed almost complete removal of all unstable end groups. (See Table III) Other analyses of the fluorinated pellets are shown in Table IV. The color of the pellets was clear white and this is indicated by the high % G values.

The "backbone volatiles index" (BVI) values of the extruded and fluorinated pellets shown in Table IV are well below the minimum of 15 which is believed to be necessary to permit bubble-free fabrication. The "backbone volatiles index" of the flake (fluorinated to remove endgroups) from which the examples were extruded are also shown in Table IV and are all greater than 15. It is apparent that the shear generated during extrusion is necessary to achieve a low "backbone volatiles index."

## TABLE III

### ENDGROUP ANALYSES

|  |  | Endgroups per $10^6$ C Atoms | |
|---|---|---|---|
| Example Sample | Endgroup* | Before Fluorination | After Fluorination |
| 1 | -COF | 0 | 0 |
|  | $-CO_2H(m)$ | 2 | 5 |
|  | $-CF=CF_2$ | 51 | 16 |
|  | $-CO_2H(D)$ | 0 | 0 |
| 2 | -COF | 24 | 2 |
|  | $-CO_2H(m)$ | 51 | 7 |
|  | $-CF=CF_2$ | 226 | 12 |
|  | $-CO_2H(D)$ | 19 | 0 |
| 3 | -COF | 0 | 0 |
|  | $-CO_2H(m)$ | 0 | 2 |
|  | $-CF=CF_2$ | 21 | 4 |
|  | $-CO_2H(D)$ | 0 | 0 |

Note: N.A. - not analyzed. *Two types of $-CO_2H$ endgroups are seen by infrared, the monomeric $-CO_2H(m)$ ends and the dimeric or hydrogen bonded $CO_2H(D)$ ends.

## TABLE IV

| Example Sample | Fluorinated Flake (Not subjected to shear) | | Extruded and Sheared Pellets (But not Fluorinated) | | Extruded, Sheared and Fluorinated Pellets | | |
|---|---|---|---|---|---|---|---|
|  | MV | BVI | MV | %G | MV | BVI | %G |
|  | kPa·s |  | kPa s |  | kPa·s |  |  |
| 1 | 9.10 | 20 | 9.5 | 5 | 8.67 | 7.6 | 51 |
| 2 | 13.7 | 17 | 22.5 | 18 | 14.3 | 5.7 | 54 |
| 3 | 88 | 16 | 68.3 | 5 | 45.0 | 3.4 | 49 |

# EP 0 150 953 B1

Control of Acid Fluoride Endgroups

An experiment was carried out to show the effect of water addition to a twin screw extruder similar to the one used in the first section of these Examples on the level of acid fluoride endgroups in the extruded product. The feed was a HFP/TFE copolymer which had been polymerized with mixed APS/KPS initiator and had a melt viscosity of 37.3 kPa.s and an HFP content of 10.0 weight percent. The extrusion equipment was similar to that described above except on a smaller scale. A 28 mm twin-screw extruder fed the polymer into a 38 mm single screw extruder and then through a screen pack and die. The resin was extruded with and without water addition (1.0% directly to the twin screw feed throat) under otherwise identical conditions. The resin extruded without water addition contained 37 acid fluoride ends per $10^6$ carbon atoms whereas the resin extruded with water addition contained no detectable acid fluoride ends.

Another experiment was carried out to show the effect of nitrogen sparging on acid fluoride end group formation. The same polymer feed and the same equipment were used as was described above for the experiments with water addition. It was found that sparging of the flake in the extruder feed bin to remove essentially all absorbed and adsorbed oxygen was not effective in reducing acid fluoride ends. However, when the flake was sparged with nitrogen under reduced pressure overnight and then fed to the extruder through a nitrogen blanketed feed system, no acid fluoride end groups were found in the extruded product. Apparently, the fluoropolymer flake contained enough absorbed and adsorbed air (oxygen) that a prolonged sparging wass required. A control (no nitrogen sparging or water addition) for this experiment contained 22 acid fluoride end groups per $10^6$ carbon atoms.

## Claims

1. A process for removing unstable backbone linkages from a copolymer to improve its thermal stability which process comprises

a) subjecting in a chamber a raw melt-processable copolymer of 80—99% by weight units of tetrafluoroethylene and complementally 20—1% by weight units of at least one ethylenically unsaturated copolymerizable comonomer, which copolymer has a backbone voltiles index greater than 15 and a melt viscosity between $10^2$ and $10^6$ Pa.s, to an absolute pressure of less than $10^5$ Pa and at a temperature of between 220°C and 450°C while moving the copolymer through the chamber and subjecting the copolymer to a shear rate between 500 and 7000 reciprocal seconds for a time sufficient to reduce the backbone volatiles index of the copolymer to less than 15; and

b) removing the copolymer from the chamber.

2. A process according to claim 1 wherein the chamber is a twin screw extruder that contains kneading blocks.

3. A process according to claim 1 or 2 wherein the copolymer is a copolymer of tetrafluoroethylene and hexafluoropropylene.

4. A process according to claim 1, 2 or 3 wherein after step b), the copolymer is contacted with fluorine gas while agitating the copolymer.

5. A process according to any one of the preceding claims wherein water is added to the chamber in an amount sufficient to remove all acid fluoride end groups.

6. A process according to any one of the preceding claims wherein the copolymer is contacted with nitrogen under reduced pressure to remove essentially all absorbed and adsorbed oxygen from the copolymer immediately prior to carrying out step a).

7. Shaped articles melt fabricated from a thermally stable copolymer prepared by a process as claimed in any one of the preceding claims.

## Patentansprüche

1. Verfahren zur Entfernung instabiler Gerüstbindungen aus einem Copolymer zur Verbesserung seiner thermischen Stabilität, welches Verfahren umfaßt

a) das Unterwerfen eines rohen schmelzverarbeitbaren Copolymers aus 80 bis 99 Gew.-% Tetrafluorethyleneinheiten und komplementär 20—1 Gew.-% Einheiten wenigstens eines ethylenisch ungesättigten copolymerisierbaren Comonomers, welches Copolymer einen Index der Flüchtigen im Gerüst von mehr als 15 und eine Schmelzviskosität zwischen $10^2$ und $10^6$ Pas aufweist, einem absoluten Druck von weniger als $10^5$ Pa bei einer Temperatur zwischen 220°C und 450°C in einer Kammer, während das Copolymer durch die Kammer bewegt wird und das Copolymer einer Schergeschwindigkeit zwischen 500 und 7000 reziproken Sekunden über eine Zeit ausgesetzt wird, die ausreicht, den Index der Flüchtigen im Gerüst des Copolymers auf weniger als 15 zu vermindern; und

b) das Entfernen des Copolymers aus der Kammer.

2. Verfahren nach Anspruch 1, worin die Kammer ein Zwillings-Schneckenextruder ist, der Knetblöcke enthält.

3. Verfahren nach Anspruch 1 oder 2, worin das Copolymer ein Copolymer aus Tetrafluorethylen und Hexafluorpropylen ist.

4. Verfahren nach Anspruch 1, 2 oder 3, worin nach Schritt b) das Copolymer mit Fluorgas in Berührung gebracht wird, während das Copolymer bewegt wird.

9

5. Verfahren nach einem der vorstehenden Ansprüche, worin der Kammer Wasser in einer Menge zugesetzt wird, die ausreicht, alle Säurefluoridendgruppen zu entfernen.

6. Verfahren nach einem der vorstehenden Ansprüche, worin das Copolymer mit Stickstoff unter vermindertem Druck in Berührung gebracht wird, um unmittelbar vor der Ausführung von Schritt a) im wesentlichen allen absorbierten und adsorbierten Sauerstoff zu entfernen.

7. Formteile, schmelzerzeugt aus einem thermisch stabilen Copolymer, das nach einem der Verfahren, wie in einem der vorstehenden Ansprüche beansprucht, hergestellt wurde.

## Revendications

1. Un procédé pour éliminer les liaisons de squelette instables d'un copolymère pour améliorer sa stabilité thermique, lequel procédé consiste à

a) soumettre, dans une chambre, un copolymère façonnable à l'état fondu constitué de 80 à 99% en poids de motifs de tétrafluoréthylène et, de façon complémentaire, de 20 à 1% en poids de motifs d'au moins un comonomère copolymérisable éthyléniquement insaturé, lequel copolymère a un indice de matières volatiles de squelette supérieur à 15 et une viscosité à l'état fondu comprise entre $10^2$ et $10^6$ Pa.s, à une pression absolue inférieure à $10^5$ Pa à une température située entre 220°C et 450°C tout en déplaçant le copolymère à travers la chambre et en soumettant le copolymère à un taux de cisaillement compris entre 500 et 7000 secondes inverses pendant un temps suffisant pour réduire l'indice de matières volatiles de squelette du copolymère à moins de 15; et

b) retirer le copolymère de la chambre.

2. Un procédé selon la revendication 1, dans lequel la chambre est une extrudeuse à double vis qui comporte des sections de malaxage.

3. Un procédé selon la revendication 1 ou 2, dans lequel le copolymère est un copolymère de tétrafluoréthylène et d'hexafluoropropylène.

4. Un procédé selon la revendication 1, 2 ou 3, dans lequel, après l'étape b), on met le copolymère en contact avec du fluor gazeux tout en agitant le copolymère.

5. Un procédé selon l'une quelconque des revendications précédentes, dans lequel on ajoute de l'eau dans la chambre en une quantité suffisante pour éliminer tous les groupes fluorure d'acide terminaux.

6. Un procédé selon l'une quelconque des revendications précédentes, dans lequel on met le copolymère en contact avec de l'azote sous pression réduite pour éliminer essentiellement tout l'oxygène absorbé et adsorbé du copolymère immédiatement avant d'exécuter l'étape a).

7. Articles façonnés fabriqués à l'état fondu à partir d'un copolymère thermiquement stable préparé par un procédé tel que revendiqué dans l'une quelconque des revendications précédentes.